# EUROPÄISCHE PATENTSCHRIFT

(11) **EP 2 158 513 B1**
(45) Veröffentlichungstag und Bekanntmachung des Hinweises auf die Patenterteilung: **06.11.2019**
(21) Anmeldenummer: 08736652.2
(22) Anmeldetag: 06.05.2008
(51) Int. Cl.: G02B 27/10, G02B 27/14, G02B 21/06, G02B 21/00

(54) **STRAHLVEREINIGER UND EINE LICHTQUELLE MIT EINEM DERARTIGEN STRAHLVEREINIGER**
BEAM COMBINER AND A LIGHT SOURCE WITH SUCH A BEAM COMBINER
CONCENTRATEUR DE FAISCEAUX ET SOURCE LUMINEUSE PRÉSENTANT UN TEL CONCENTRATEUR DE FAISCEAUX

(30) Priorität: 15.06.2007 DE 102007028337
(43) Veröffentlichungstag der Anmeldung: 03.03.2010
(73) Patentinhaber: Leica Microsystems CMS GmbH, 35578 Wetzlar (DE)
(72) Erfinder: SEYFRIED, Volker, 69226 Nussloch (DE)
(74) Vertreter: Schaumburg und Partner Patentanwälte mbB
(86) Internationale Anmeldenummer: PCT/EP2008/055538
(87) Internationale Veröffentlichungsnummer: WO 2008/151884

(56) Entgegenhaltungen:
- EP-A- 1 182 445
- WO-A1-00/39545
- WO-A1-02/057759
- DE-A1- 19 633 185
- DE-A1-102004 052 955
- DE-A1-102004 054 262
- DE-B3-102004 030 208
- US-A- 5 880 473
- US-A1- 2001 028 031
- US-A1- 2004 105 485
- US-A1- 2004 238 719
- US-A1- 2006 006 067
- US-A1- 2006 237 666

## Beschreibung

Die Erfindung betrifft eine optische Anordnung mit einem Strahlvereiniger zum Vereinigen mindestens zweier Lichtstrahlen zu einem vereinigten Lichtstrahl im Strahlengang der optischen Anordnung, vorzugsweise eines Mikroskops.

Strahlvereiniger und Lichtquellen der eingangs genannten Art sind aus der Praxis bekannt und werden bspw. im Bereich der Konfokalmikroskopie eingesetzt. Hierzu ist es gemäß der DE 196 33 185 C2 bekannt, die Lichtstrahlen zweier sich in den Wellenlängen unterscheidender Laser durch dichroitische Strahlteiler - Farbstrahlteiler - miteinander zu vereinigen. Durch sequentielle Anordnung dieses Aufbaus können drei oder mehrere Laserstrahlen vereinigt werden.

Auch eine Vereinigung von Lichtstrahlen über Polarisationsstrahlteiler ist gemäß der EP 0 473 071 B1 bekannt. Des Weiteren ist es der Anmelderin bekannt, die Vereinigung von Lichtstrahlen über Lichtleitfasern zu bewerkstelligen. Weiterhin ist es aus der DE 103 37 558 A1 bekannt, eine räumliche spektrale Aufspaltung von Lichtstrahlen vorzunehmen, wobei die Vereinigung räumlich über ein strukturiertes, mikrostrukturiertes und/oder schaltbares Element vollzogen wird und die Lichtstrahlen wieder durch ein dispersives Element auf eine gemeinsame Strahlachse zusammengeführt werden.

Bei den bekannten Strahlvereinigern ist problematisch, dass bspw. die Verwendung von Farbstrahlteilern zu einem Leistungsverlust des meist aufwändig erzeugten und ohnehin nicht leistungsstarken Weißlichts führt. Des Weiteren sind bspw. Polarisationsstrahlteiler bei Lichtquellen mit einer photonischen Kristallfaser nicht verwendbar, da das Emissionslicht unpolarisiert ist.

Darüber hinaus lassen die meisten der bekannten Anordnungen ein computergesteuertes Schalten der Charakteristik nicht zu. Wo dies möglich ist, bspw. bei der aus der DE 103 37 558 A1 bekannten Anordnung, sind die Schaltzeiten in Anbetracht heutiger Anforderungen zu lang.

Dokument DE 10 2004 030 208 B3 offenbart ein Auflichtmikroskop mit einer als akustooptisches Element ausgeführten optischen Vorrichtung, die in einem Beleuchtungsstrahlengang und einem Detektionsstrahlengang angeordnet ist. Das offenbarte Auflichtmikroskop umfasst ferner einen Mehrlinienlaser zum Erzeugen von Beleuchtungslicht. Durch die optische Vorrichtung wird Beleuchtungslicht des Mehrlinienlasers in einen erwünschten Teil zum Beleuchten einer Probe und einen unerwünschten Teil aufgeteilt. Der unerwünschte Teil wird durch die optische Vorrichtung in eine Strahlfalle gelenkt.

Dokument US 2001/0028031 A1 offenbart eine Vorrichtung zum Vereinigen von Laserlichtstrahlen mindestens zweier Laserlichtquellen. Das von den mindestens zwei Laserlichtquellen emittierte Laserlicht hat dabei im Wesentlichen jeweils die gleiche Wellenlänge. Die Vorrichtung umfasst einen akustooptischen Deflektor zur Vereinigung der Laserlichtstrahlen. Der akustooptische Deflektor wird synchron zur Pulsfolge der Laserlichtstrahlen - in einem zeitlichen Multiplex - angesteuert, so dass die Laserlichtstrahlen jeweils zu einem vereinigten Lichtstrahl abgelenkt und somit vereinigt werden.

Dokument EP 1 182 445 A2 offenbart ein integriertes optisches Interferometer, bei dem Licht einer einzigen Lichtquelle in ein Lichteinfallgitter eingekoppelt wird. Das Lichteinfallgitter ist ausgebildet, Licht einer einzigen Wellenlänge aus dem eingekoppelten Licht zu selektieren und in einen Wellenleiter zu lenken.

Dokument WO 02/057759 A1 offenbart eine spektroskopische Analysevorrichtung mit einem Strahlvereiniger, der einen akustooptischen Deflektor (AOD) umfasst. Die Frequenz einer Schallwelle, die durch den AOD propagiert, ist derart gewählt, dass ein gebeugter Strahl erster Ordnung mit einer ersten Wellenlänge und ein gebeugter Strahl nullter Ordnung mit einer zweiten Wellenlänge so abgelenkt werden, dass sie den AOD parallel verlassen.

Dokument DE 10 2004 054 262 A1 offenbart eine Vorrichtung zur Untersuchung und Manipulation von mikroskopischen Objekten. Die Vorrichtung umfasst eine erste Lichtquelle zur Erzeugung eines Beleuchtungslichtstrahls, eine zweite Lichtquelle zur Erzeugung eines Manipulationslichtstrahls und ein akustooptisches Element. Das akustooptische Element ist in dem Strahlengang des Beleuchtungslichtstrahls angeordnet und derart ausgebildet, dass der Beleuchtungslichtstrahl und der Manipulationslichtstrahl so abgelenkt werden, dass diese das akustooptische Element unter einem kleinen relativen Strahlwinkel verlassen.

Dokument WO 00/39545 A1 offenbart eine optische Anordnung mit zwei Laserlichtquellen, deren Lichtstrahlen durch ein AOTF kollinear zusammengeführt werden.

Schließlich ist bei den bekannten Anordnungen ein kompakter und stabiler Aufbau nur schwierig zu realisieren und sind die bekannten Anordnungen technisch relativ kompliziert, teilweise justageunfreundlich und sehr unflexibel.

Der vorliegenden Erfindung liegt daher die Aufgabe zugrunde, eine optische Anordnung mit einem Strahlvereiniger der eingangs genannten Art derart auszugestalten und weiterzubilden, dass eine flexible Strahlvereinigung mit konstruktiv einfachen Mitteln ermöglicht ist.

Die voranstehende Aufgabe ist erfindungsgemäß durch eine optische Anordnung mit einem Strahlvereiniger mit den Merkmalen des Patentanspruchs 1 gelöst. Danach ist der gattungsgemäße Strahlvereiniger durch ein AOTF (Acousto Optical Tunable Filter) gekennzeichnet, in dem eine mechanische Welle oder Schallwelle zum Ablenken oder Beugen von Lichtstrahlen erzeugbar ist, so dass ein in das AOTF eintretender erster Lichtstrahl und mindestens ein in das AOTF eintretender zweiter Lichtstrahl das AOTF als vereinigter Lichtstrahl kollinear zueinander verlassen.

Erfindungsgemäß ist erkannt worden, dass es zur Strahlvereinigung möglich ist, ein AOTF einzusetzen, in dem eine mechanische Welle oder Schallwelle zum Ablenken oder Beugen von Lichtstrahlen erzeugbar ist. Dabei werden ein in das AOTF eintretender erster Lichtstrahl und mindestens ein in das AOTF eintretender zweiter Lichtstrahl derart vereinigt, dass sie das AOTF als vereinigter Lichtstrahl kollinear zueinander verlassen. Mit dem erfindungsgemäßen Strahlvereiniger ist bspw. ein sehr schnelles computergesteuertes Schalten der Charakteristik möglich. Die Schaltzeit liegt dabei in der Größenordnung von 1 µs. Des Weiteren sind akustooptische Elemente aufgrund ihrer meist modulartigen Ausgestaltung sehr einfach in optische Anordnungen zu integrieren.

Folglich ist mit dem erfindungsgemäßen Strahlvereiniger ein Strahlvereiniger in Form eines AOBM (Acousto Optical Beam Merger) angegeben, bei dem eine flexible Strahlvereinigung mit konstruktiv einfachen Mitteln ermöglicht ist, wodurch ein kompakter und stabiler Aufbau realisierbar ist, der darüber hinaus noch sehr einfach justierbar ist.

Im Konkreten ist das AOTF von dem ersten Lichtstrahl derart durchstrahlbar, dass die mechanische Welle oder Schallwelle den ersten Lichtstrahl nicht ablenkt oder beugt. Ferner ist vorgesehen, dass die mechanische Welle oder Schallwelle den mindestens einen zweiten Lichtstrahl derart ablenkt oder beugt, dass der erste Lichtstrahl und der mindestens eine zweite Lichtstrahl das AOTFals vereinigter Lichtstrahl kollinear zueinander verlassen. Hierdurch ist eine sichere Vereinigung der Lichtstrahlen ermöglicht.

In weiter vorteilhafter Weise weist der Strahlvereiniger zur Kompensation von durch das AOTF hervorgerufenen räumlichen Aufspaltungen oder chromatischen oder polarisationsabhängigen Aberrationen ein Kompensationselement auf.

In besonders einfacher und daher vorteilhafter Weise ist das Kompensationselement ein akustooptisches Element. Dabei ist das Kompensationselement in weiter vorteilhafter Weise ein vorzugsweise passives AOTF. Ganz allgemein könnte das Kompensationselement ein zum akustooptischen Element komplementärer passiver Kristall sein, wodurch eine besonders einfache Ausgestaltung des Strahlvereinigers realisierbar ist.

Bei der Wahl des Kompensationselements ist auf den jeweiligen Anwendungsfall abzustellen.

Die Verwendung eines weiteren akustooptischen Elements - abgesehen von evtl. dem als akustooptisches Element ausgebildeten Kompensationselement, das bspw. zur Aberrationskorrektion dient, dann aber nicht beschaltet werden muss und folglich nur passiv agiert - ist vermieden. Hierdurch können Kosten deutlich reduziert und die Ansteuerung erheblich vereinfacht werden.

Der erfindungsgemäße Strahlvereiniger lässt sich besonders vorteilhaft im Bereich der Mikroskopie, insbesondere im Bereich der Laserrastermikroskopie oder Konfokalmikroskopie einsetzen. Dabei ist es in vielen Fällen vorteilhaft, dem erfindungsgemäßen Strahlvereiniger einen ansteuerbaren Strahlteiler, vorzugsweise als Hauptstrahlteiler des Konfokalmikroskops, nachzuschalten. Dabei könnte als Strahlteiler ein AOBS (Acousto Optical Beam Splitter) verwendet werden.

In einem solchen Fall kann dann besonders vorteilhaft eine abgestimmte bzw. synchronisierte Ansteuerung der Komponenten vorgenommen werden. Dies beinhaltet dann vor allem, dass der Hauptstrahlteiler des Konfokalmikroskops immer so beschaltet wird, dass das durch den Strahlvereiniger zur Nutzung bestimmte Licht den Hauptstrahlteiler möglichst ungehindert - oder mit einer definierten Abschwächung - passieren kann. Hierzu wird bspw. bei einer Vielzahl von Beschaltungen des erfindungsgemäßen Strahlvereinigers jeweils die zugehörige optimale Einstellung des nachgeordneten Konfokalmikroskop-Hauptstrahlteilers bestimmt, entsprechend abgespeichert und für die spätere Ansteuerung benutzt, so dass in jeder Situation eine optimale Abstimmung der Komponenten erfolgen kann. Selbstverständlich kann in der Regel die Kalibration nur für einzelne Lichtwellenlängen erfolgen. Jedoch ist es leicht, durch Interpolation der Werte an einigen Stützstellen die optimale Kalibration für alle im Nutzbereich liegenden Wellenlängen zu erreichen.

Die erfindungsgemäße Strahlvereinigungstechnik könnte auch mit anderen Strahlvereinigungstechniken kombiniert werden, wobei bspw. zu bereits im Vorfeld vereinigten Strahlen weitere Strahlen hinzuvereinigt werden könnten.

Zur weiteren Erhöhung der Flexibilität des Einsatzes des Strahlvereinigers könnte vor und/oder nach dem Strahlvereiniger mindestens ein die Lichtintensität variierendes Element, vorzugsweise ein AOTF, angeordnet sein.

Im Hinblick auf eine besonders einfach handhabbare Vorrichtung könnte der Strahlvereiniger als Modul oder als mechanische Einheit ausgebildet sein. Der Strahlvereiniger oder eine derartige Einheit könnte in weiter vorteilhafter Weise weitere Bauteile wie bspw. einen AOTF oder eine Temperaturstabilisierung aufweisen.

Mit dem erfindungsgemäßen Strahlvereiniger ist es in vorteilhafter Weise möglich, mit dem ersten Lichtstrahl nicht nur einen zweiten, sondern auch einen dritten oder weiteren Lichtstrahl zu vereinigen. Letztlich ist hier ein "Auffädeln" mehrerer Lichtstrahlen aufeinander möglich.

Bspw. könnte der erste oder der zweite Lichtstrahl aus einem Mehrwellenlängen-Laser, vorzugsweise Argon-Ionen-Laser, aus bereits vereinten Einzelstrahlen, aus einer Weißlichtquelle oder aus einem durchstimmbaren Laser gebildet sein.

In weiter vorteilhafter Weise könnte die Weißlichtquelle oder der durchstimmbare Laser oder eine durchstimmbare Lichtquelle ein mikrostrukturiertes Element, eine sogenannte "tapered" Faser, eine speziell dotierte Faser, vorzugsweise mit anomaler Dispersion, oder ein - vorzugsweise vergleichbares - optische Nichtlinearitäten induzierendes Element aufweisen, wobei darin Licht eines Laser eingekoppelt wird, aus dem durch nichtlineare Prozesse neue Wellenlängen erzeugt werden. Dabei könnte das mikrostrukturierte Element vorzugsweise eine photonische Kristallfaser (PCF), einen photonischen Kristall oder ein Photonic-Band-Gap-Material aufweisen. Mit der Wahl der Ausgestaltung des mikrostrukturierten Elements ist somit eine einfache Anpassung an individuelle Erfordernisse ermöglicht.

Falls mindestens eine der Wellenlängen einer der Lichtquellen durchstimmbar oder wählbar ist, könnte in vorteilhafter Weise eine Radiofrequenz am akustooptischen Element an eine veränderte Wellenlänge anpassbar sein. Bei dieser Anpassung könnte in weiter vorteilhafter Weise die Temperatur des akustooptischen Elements und/oder seiner Umgebung mit berücksichtigt werden, so dass eine optimale Anpassung der Radiofrequenz ermöglicht ist.

Zur Ausblendung unerwünschten Lichts schon im Vorfeld könnte dem Strahlvereiniger mindestens ein optisches Filter vorgeschaltet sein. Im Fall eines Weißlichtlasers handelt es sich hierbei vor allem um längerwelliges Licht als das eigentlich erwünschte Nutzlicht, welches bspw. durch ein Bandkantenfilter ausgeblendet werden könnte, um die Lichtbelastung der akustooptischen Bauteile zu minimieren.

In weiter vorteilhafter Weise könnte der Strahlvereiniger eine Strahlfalle aufweisen, in der das nicht zur Verwendung bestimmte Licht gesammelt wird. Eine derartige Ausgestaltung ist insbesondere bei starken Lichtleistungen wichtig, da ansonsten unerwünschte Effekte wie Beschädigungen von Bauteilen oder Lasersicherheitsprobleme auftreten können.

Zur Realisierung einer besonders kompakten Anordnung könnte der Strahlvereiniger in einem Gehäuse einer der die Lichtstrahlen erzeugenden Lichtquellen oder Laserlichtquellen angeordnet sein. In diesem Fall könnte der Lichtstrahl der anderen Lichtquelle oder Laserlichtquelle vorzugsweise mittels einer Glasfaser in das Gehäuse der einen Lichtquelle oder Laserlichtquelle zum Strahlvereiniger geführt sein, so dass das vereinigte Licht beider Lichtquellen oder Laserlichtquellen das Gehäuse gemeinsam durch eine zweite Glasfaser verlassen könnte.

Hinsichtlich der Vorteile einer derartigen Lichtquelle wird zur Vermeidung von Wiederholungen auf die voranstehenden Ausführungen zu den Vorteilen des erfindungsgemäßen Strahlvereinigers verwiesen.

Mit dem erfindungsgemäßen Strahlvereiniger ist die Vereinigung mehrerer Lichtstrahlen zu einem gemeinsamen Strahl ermöglicht, wobei insbesondere kontinuierlich durchstimmbare Laserstrahlen, bspw. aus Weißlichtquellen, vereinigt werden können.

Es gibt nun verschiedene Möglichkeiten, die Lehre der vorliegenden Erfindung in vorteilhafter Weise auszugestalten und weiterzubilden. Dazu ist einerseits auf die nachgeordneten Patentansprüche und andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung ein Ausführungsbeispiel eines erfindungsgemäßen Strahlvereinigers und
- Fig. 2: in einer schematischen Darstellung eine typische Verwendung des erfindungsgemäßen Strahlvereinigers in einem Konfokalmikroskop.

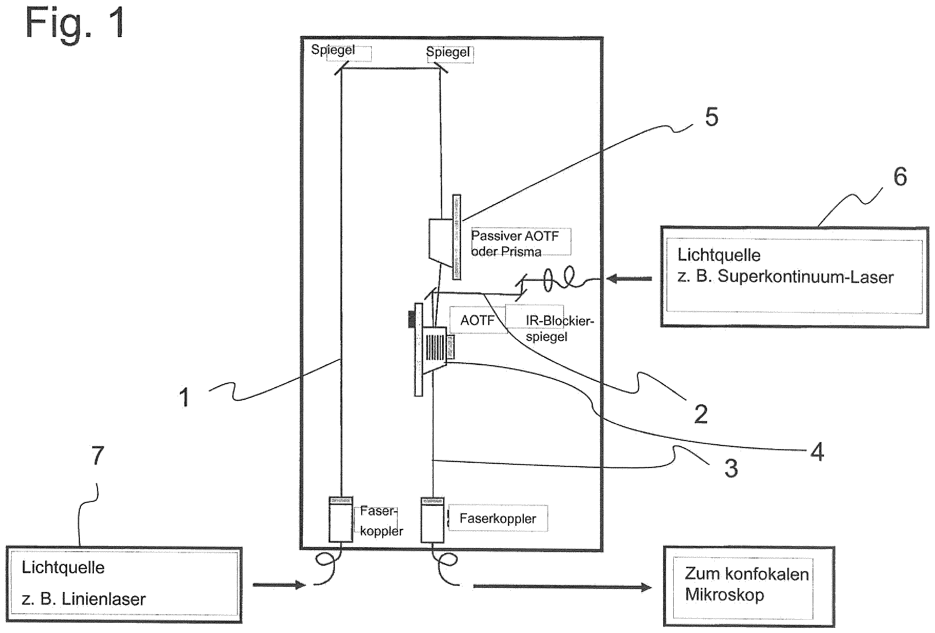

Fig. 1 zeigt in einer schematischen Darstellung ein Ausführungsbeispiel eines erfindungsgemäßen Strahlvereinigers zum Vereinigen mindestens zweier Lichtstrahlen 1 und 2 zu einem vereinigten Lichtstrahl 3. Im Hinblick auf eine flexible Strahlvereinigung mit konstruktiv einfachen Mitteln weist der Strahlvereiniger ein akustooptisches Element 4 auf, in dem eine mechanische Welle oder Schallwelle zum Ablenken oder Beugen von Lichtstrahlen erzeugbar ist, so dass ein in das akustooptische Element 4 eintretender erster Lichtstrahl 1 und ein in das akustooptische Element 4 eintretender zweiter Lichtstrahl 2 das akustooptische Element 4 als vereinigter Lichtstrahl 3 kollinear zueinander verlassen.

Im Konkreten ist das akustooptische Element 4 von dem ersten Lichtstrahl 1 derart durchstrahlbar, dass die mechanische Welle oder Schallwelle den ersten Lichtstrahl 1 - zumindest zum Teil - nicht ablenkt oder beugt. Die mechanische Welle oder Schallwelle beeinflusst den zweiten Lichtstrahl 2 jedoch derart, dass der erste Lichtstrahl 1 und der zweite Lichtstrahl 2 das akustooptische Element 4 als vereinigter Lichtstrahl 3 kollinear zueinander verlassen.

Bei dem hier gezeigten Ausführungsbeispiel ist das akustooptische Element 4 ein AOTF.

Zur Kompensation von durch das akustooptische Element 4 hervorgerufenen räumlichen Aufspaltungen oder chromatischen oder polarisationsabhängigen Aberrationen, die durch die Brechung bzw. Doppelbrechung im Kristall des AOTF erzeugt werden, weist der Strahlvereiniger ein Kompensationselement 5 auf. Das Kompensationselement 5 ist als passiver AOTF oder als Prisma ausgebildet.

Des Weiteren weist der Strahlvereiniger noch diverse Spiegel und Faserkoppler zur Ankopplung der Lichtquellen 6 und 7 auf.

Die Lichtquelle 6 ist ein kontinuierlich durchstimmbarer Laser. Die Lichtquelle 7 kann ein Argon-Ionen-Laser sein.

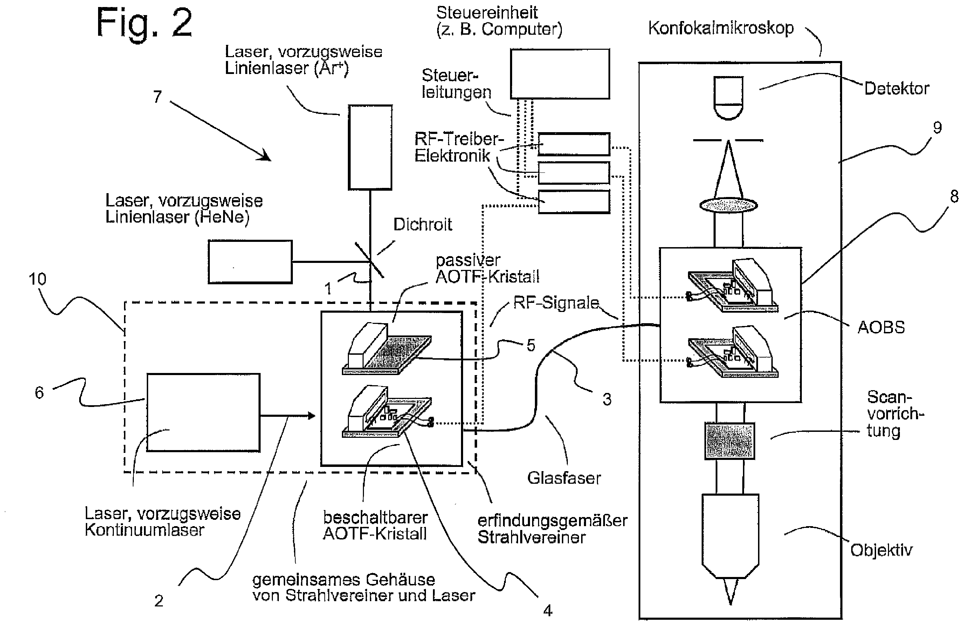

Fig. 2 zeigt in einer schematischen Darstellung den Einsatz des Strahlvereinigers aus Fig. 1 in einem einen ansteuerbaren Strahlteiler 8 aufweisenden Konfokalmikroskop 9. Der Strahlteiler 8 dient als Hauptstrahlteiler des Konfokalmikroskops 9.

Bei der Verwendung des Strahlvereinigers ist eine abgestimmte bzw. synchronisierte Ansteuerung der Komponenten realisiert. Dazu gehört, dass der Strahlteiler 8 bzw. Hauptstrahlteiler des Konfokalmikroskops 9 immer so beschaltet wird, dass das durch den Strahlvereiniger zur Nutzung bestimmte Licht den Hauptstrahlteiler 8 möglichst ungehindert passieren kann. Hierzu wird bei einer Vielzahl von Beschaltungen des erfindungsgemäßen Strahlvereinigers jeweils die zugehörige optimale Einstellung des nachgeordneten Strahlteilers 8 bestimmt, entsprechend abgespeichert und für die spätere Ansteuerung benutzt, so dass in jeder Situation eine optimale Abstimmung der Komponenten erfolgen kann. Der Strahlvereiniger ist in einem Gehäuse 10 der Lichtquelle 6 angeordnet. Der Lichtstrahl 1 der anderen Lichtquelle 7 ist in das Gehäuse 10 zum Strahlvereiniger geführt. Der Lichtstrahl 1 ist ein Lichtstrahl, der aus vereinten Einzelstrahlen besteht.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Patentansprüche verwiesen.

Schließlich sei angemerkt, dass das voranstehend beschriebene Ausführungsbeispiel lediglich zur Erörterung der beanspruchten Lehre dient, diese jedoch nicht auf das Ausführungsbeispiel einschränkt.

### Bezugszeichenliste

- 1: erster Lichtstrahl
- 2: zweiter Lichtstrahl
- 3: vereinigter Lichtstrahl
- 4: akustooptisches Element
- 5: Kompensationselement
- 6: Lichtquelle
- 7: Lichtquelle
- 8: Strahlteiler
- 9: Konfokalmikroskop
- 10: Gehäuse

## Patentansprüche

1. Optische Anordnung mit
einem Strahlvereiniger zum Vereinigen mindestens zweier Lichtstrahlen (1, 2) zu einem vereinigten Lichtstrahl (3), nämlich zumindest eines ersten Lichtstrahls (1) und eines zweiten Lichtstrahls (2), im Strahlengang der optischen Anordnung,
einer an den Strahlvereiniger gekoppelten ersten Lichtquelle (7) zur Erzeugung des ersten Lichtstrahls (1) und
einer an den Strahlvereiniger gekoppelten zweiten Lichtquelle (6) zur Erzeugung des zweiten Lichtstrahls (2),
wobei die erste Lichtquelle (7) zur Erzeugung des ersten Lichtstrahls (1) ein Einzelwellenlängen- oder Mehrwellenlängen-Laser ist,
wobei der erste Lichtstrahl (1) oder der zweite Lichtstrahl (2) Licht unterschiedlicher Wellenlängen oder Licht mit unterschiedlichen spektralen Anteilen aufweist, und
wobei der Strahlvereiniger ein erstes AOTF (Acousto Optical Tunable Filter) (4) aufweist, in dem eine mechanische Welle oder Schallwelle zum Ablenken oder Beugen von Lichtstrahlen erzeugbar ist, so dass der in das erste AOTF (4) des Strahlvereinigers eintretende erste Lichtstrahl (1) und mindestens der in das erste AOTF (4) des Strahlvereinigers eintretende zweite Lichtstrahl (2) das erste AOTF (4) als vereinigter Lichtstrahl (3) kollinear zueinander verlassen,
**dadurch gekennzeichnet, dass** die zweite Lichtquelle (6) zur Erzeugung des zweiten Lichtstrahls (1) ein kontinuierlich durchstimmbarer Laser ist, dass der Strahlvereiniger ein Kompensationselement (5) zur Kompensation von durch das erste AOTF (4) hervorgerufenen räumlichen Aufspaltungen oder chromatischen oder polarisationsabhängigen Aberrationen aufweist,
dass das Kompensationselement (5) ein akustooptisches Element in Form eines zweiten AOTF ist, und
dass das erste AOTF (4) von dem ersten Lichtstrahl (1) derart durchstrahlbar ist, dass die mechanische Welle oder Schallwelle den ersten Lichtstrahl (1) nicht ablenkt oder beugt, und dass die mechanische Welle oder Schallwelle den zweiten Lichtstrahl (2) derart ablenkt oder beugt, dass der erste Lichtstrahl (1) und der zweite Lichtstrahl (2) das erste AOTF (4) als vereinigter Lichtstrahl (3) kollinear zueinander verlassen.

2. Optische Anordnung nach Anspruch 1, **dadurch gekennzeichnet, dass** dem Strahlvereiniger ein ansteuerbarer Strahlteiler (8) oder ein ansteuerbarer Strahlteiler als Hauptstrahlteiler eines Konfokalmikroskops (9) nachgeschaltet ist.

3. Optische Anordnung nach Anspruch 1 oder 2, **dadurch gekennzeichnet, dass** vor und/oder nach dem Strahlvereiniger mindestens ein die Lichtintensität variierendes Element oder ein AOTF angeordnet ist.

4. Optische Anordnung nach einem der Ansprüche 1 bis 3, **dadurch gekennzeichnet, dass** der Strahlvereiniger eine Temperaturstabilisierung aufweist.

5. Optische Anordnung nach einem der Ansprüche 1 bis 4, **dadurch gekennzeichnet, dass** der Strahlvereiniger in einem Gehäuse (10) einer der die Lichtstrahlen (2) erzeugenden Lichtquellen (6) oder Laserlichtquellen angeordnet ist.

6. Optische Anordnung nach einem der Ansprüche 1 bis 5, **dadurch gekennzeichnet**, das die optische Anordnung ein Mikroskop ist.

## Claims

1. Optical arrangement, comprising
a beam combiner for combining at least two light beams (1, 2) to form a combined light beam (3), specifically at least of a first light beam (1) and a second light beam (2), in the beam path of the optical arrangement,
a first light source (7) coupled to the beam combiner to produce the first light beam (1) and
a second light source (6) coupled to the beam combiner to produce the second light beam (2),
wherein the first light source (7) for producing the first light beam (1) is a single-wavelength or multi-wavelength laser,
wherein the first light beam (1) or the second light beam (2) have light of different wavelengths or light having different spectral components, and
wherein the beam combiner has a first AOTF (acousto-optic tunable filter) (4) in which a mechanical wave or sound wave for deflecting or diffracting light beams is producible such that the first light beam (1) entering the first AOTF (4) of the beam combiner and at least the second light beam (2) entering the first AOTF (4) of the beam combiner leave the first AOTF (4) in collinear fashion as a combined light beam (3),
**characterized in that** the second light source (6) for producing the second light beam (1) is a continuously tunable laser,
**in that** the beam combiner has a compensation element (5) for compensating spatial splits or chromatic or polarization-dependent aberrations caused by the first AOTF (4),
**in that** the compensation element (5) is an acousto-optical element in the form of a second AOTF, and
**in that** the first light beam (1) is able to radiate through the first AOTF (4) in a manner such that the mechanical wave or sound wave does not deflect or diffract the first light beam (1) and **in that** the mechanical wave or sound wave deflects or diffracts the second light beam (2) such that the first light beam (1) and the second light beam (2) leave the first AOTF (4) in collinear fashion as a combined light beam (3).

2. Optical arrangement according to Claim 1, **characterized in that** a controllable beam splitter (8), or a controllable beam splitter in the form of a main beam splitter of a confocal microscope (9), is arranged downstream of the beam combiner.

3. Optical arrangement according to Claim 1 or 2, **characterized in that** at least one element varying the light intensity or an AOTF is arranged upstream of and/or downstream of the beam combiner.

4. Optical arrangement according to one of Claims 1 to 3, **characterized in that** the beam combiner has temperature stabilization.

5. Optical arrangement according to one of Claims 1 to 4, **characterized in that** the beam combiner is arranged in a housing (10) of one of the light sources (6) or laser light sources producing the light beams (2).

6. Optical arrangement according to one of Claims 1 to 5, **characterized in that** the optical arrangement is a microscope.

## Revendications

1. Arrangement optique comprenant
un combineur de rayons destiné à combiner au moins deux rayons lumineux (1, 2) en un rayon lumineux combiné (3), à savoir au moins un premier rayon lumineux (1) et un deuxième rayon lumineux (2) dans le trajet de rayons de l'arrangement optique,
une première source de lumière (7) destinée à générer le premier rayon lumineux (1) couplée au combineur de rayons,
une deuxième source de lumière (6) destinée à générer le deuxième rayon lumineux (2) couplée au combineur de rayons,
la première source de lumière (7) destinée à générer le premier rayon lumineux (1) étant un laser à longueurs d'onde individuelles ou à longueurs d'onde multiples,
le premier rayon lumineux (1) ou le deuxième rayon lumineux (2) présentant une lumière aux longueurs d'onde différentes ou une lumière ayant des composantes spectrales différentes, et
le combineur de rayons possédant un premier AOTF (Acousto Optical Tunable Filter - Filtre opto-acoustique accordable) (4) dans lequel peut être générée une onde mécanique ou une onde sonore destinée à dévier ou à fléchir des rayons lumineux de sorte que le premier rayon lumineux (1) qui pénètre dans le premier AOTF (4) du combineur de rayons et au moins le deuxième rayon lumineux (2) qui pénètre dans le premier AOTF (4) du combineur de rayons quittent le premier AOTF (4) de manière collinéaire l'un à l'autre sous la forme d'un rayon lumineux combiné (3),
**caractérisé en ce que** la deuxième source de lumière (6) destinée à générer le deuxième rayon lumineux (1) est un laser accordable en continu,
**en ce que** le combineur de rayons possède un élément de compensation (5) destiné à compenser les dissociations dans l'espace ou les aberrations chromatiques ou dépendantes de la polarisation provoquées par le premier AOTF (4),
**en ce que** l'élément de compensation (5) est un élément opto-acoustique sous la forme d'un deuxième AOTF, et
**en ce que** le premier AOTF (4) peut être traversé par le premier rayon lumineux (1) de telle sorte que l'onde mécanique ou l'onde sonore ne dévie ni ne fléchit le premier rayon lumineux (1), et que l'onde mécanique ou l'onde sonore dévie ou fléchit le deuxième rayon lumineux (2), de telle sorte que le premier rayon lumineux (1) et le deuxième rayon lumineux (2) quittent le premier AOTF (4) de manière collinéaire l'un à l'autre sous la forme d'un rayon lumineux combiné (3).

2. Arrangement optique selon la revendication 1, **caractérisé en ce qu'**un séparateur de rayons (8) commandable ou un séparateur de rayons commandable en tant que séparateur de rayons principal d'un microscope confocal (9) est monté en aval du combineur de rayons.

3. Arrangement optique selon la revendication 1 ou 2, **caractérisé en ce qu'**au moins un élément faisant varier l'intensité lumineuse ou un AOTF est disposé avant et/ou après le combineur de rayons.

4. Arrangement optique selon l'une des revendications 1 à 3, **caractérisé en ce que** le combineur de rayons possède une stabilisation de la température.

5. Arrangement optique selon l'une des revendications 1 à 4, **caractérisé en ce que** le combineur de rayons est disposé dans un boîtier (10) de l'une des sources de lumière (6) ou des sources de lumière laser qui génèrent les rayons lumineux (2).

6. Arrangement optique selon l'une des revendications 1 à 5, **caractérisé en ce que** l'arrangement optique est un microscope.
